# EUROPÄISCHE PATENTSCHRIFT

(11) **EP 2 574 222 B1**
(45) Veröffentlichungstag und Bekanntmachung des Hinweises auf die Patenterteilung: **08.11.2017**
(21) Anmeldenummer: 12006589.1
(22) Anmeldetag: 20.09.2012
(51) Int. Cl.: A01B 59/06

(54) **Hubwerk**
Hoisting gear
Dispositif de levage

(30) Priorität: 29.09.2011 DE 102011115266
(43) Veröffentlichungstag der Anmeldung: 03.04.2013
(73) Patentinhaber: Maschinenfabrik Bernard Krone GmbH, 48480 Spelle (DE)
(72) Erfinder: Afting, Andreas, 48488 Emsbüren (DE); Lömker, Jens, 48496 Hopsten (DE)

(56) Entgegenhaltungen:
- EP-A1- 0 465 790
- EP-A1- 2 316 256
- DE-A1- 19 624 396
- DE-C1- 4 415 205
- GB-A- 2 052 237

## Beschreibung

Die Erfindung betrifft ein Hubwerk für ein im Frontanbau an eine landwirtschaftliche Zug- und Antriebsmaschine anbringbares Arbeitsgerät nach dem Oberbegriff des Anspruchs 1. Derartige Hubwerke sind in vielfältigen Ausführungsformen bekannt.

Gemäß dem Stand der Technik geht aus der EP 2 316 256 A1 ein Hubwerk hervor, welches über Unterlenker und einem Oberlenker ein Frontmähwerk im Frontbereich einer landwirtschaftlichen Zug- und Antriebsmaschine aufnimmt. Über dieses Hubwerk kann das Frontmähwerk aus einer über den Erdboden gleitenden Arbeits- und Betriebsstellung in eine ausgehobene Transportstellung und umgekehrt überführt werden. Weiterhin sind dem Hubwerk als Kolben-Zylindereinheiten ausgebildete Entlastungselemente zur Regulierung der Auflagekraft des Frontmähwerkes auf dem Erdboden zugeordnet, die sich zwischen dem Mähwerksrahmen und zusätzlichen, am Frontrahmen der landwirtschaftlichen Zug- und Antriebsmaschine montierten Halterungen erstrecken. Bei den heutigen modernen Zug- und Antriebsmaschinen (Traktoren) ist der Frontbereich aufgrund von designerischen Vorgaben durch die Anbringung von Schutz- und Haubenbauteilen so gestaltet, dass ein Anbauen von zusätzlichen Halterungen im Frontbereich, beispielsweise zur Anbringung von Arretierungsketten oder Entlastungselementen kaum mehr möglich ist.

Der Erfindung liegt daher die Aufgabe zugrunde, ein Hubwerk für ein im Frontanbau an eine landwirtschaftliche Zug- und Antriebsmaschine anbringbares Arbeitsgerät vorzuschlagen, bei dem die Nachteile aus dem Stand der Technik vermieden sind und der Anbau von Frontmähwerken einschließlich der Anbringung von Arretierungsketten oder Entlastungselementen mit geringstem Aufwand erreichbar ist.

Gelöst wird diese Aufgabe der Erfindung mit den kennzeichnenden Merkmalen des Anspruchs 1. Weitere vorteilhafte Weiterbildungen gehen aus den abhängigen Ansprüchen hervor.

Gemäß der Erfindung wird ein Hubwerk für ein im Frontanbau an eine landwirtschaftliche Zug- und Antriebsmaschine anbringbares Arbeitsgerät, insbesondere für ein Frontmähwerk vorgeschlagen, mit zwei an gestellfesten Anlenkstellen der landwirtschaftlichen Zug- und Antriebsmaschine schwenkbar angebrachten Unterlenkern zur Aufnahme der Unterlenkeraufnahmestellen des Arbeitsgerätes und einem Oberlenker, der sich zwischen einer Oberlenkeraufnahmetasche der landwirtschaftlichen Zug- und Antriebsmaschine und einer Oberlenkeraufnahmestelle am Arbeitsgerät erstreckt, wobei dem Oberlenker an seinem der landwirtschaftlichen Zug- und Antriebsmaschine zugewandten Anschlusskopf ein Anschlagmittel zugeordnet ist, welches gleichzeitig mit dem der landwirtschaftlichen Zug- und Antriebsmaschine zugewandten Anschlusskopf des Oberlenkers in der Oberlenkeraufnahmetasche der landwirtschaftlichen Zug- und Antriebsmaschine arretierbar ist, wobei das Anschlagmittel gegenüber dem der landwirtschaftlichen Zug- und Antriebsmaschine zugewandten Anschlusskopf relativ beweglich ist.

Durch die erfindungsgemäße Gestaltung des Hubwerks wird deutlich, wie mit geringst möglichem Aufwand im Frontbereich einer Zug- und Antriebsmaschine Möglichkeiten geschaffen werden können, Anschlussstellen für Arretierungsketten oder Entlastungselemente bereitzustellen, welche sich zu beiden Seiten des Oberlenkers hin zu einem Rahmen des Arbeitsgerätes erstrecken, ohne dass im Frontbereich der landwirtschaftlichen Zug- und Antriebsmaschine unerwünschte Veränderungen, beispielsweise an Schutzhauben oder dgl. vorgenommen werden müssen. Weiterhin zeigt die Erfindung in vorteilhafter Weise auf, wie das Anbringen von Arretierungsketten oder Entlastungselementen im Frontbereich von landwirtschaftlichen Zug- und Antriebsmaschinen möglich ist, ohne dass dabei unzulässige Biegekräfte in den Oberlenker eingebracht werden. Um diese Vorteile an einem Hubwerk zu verwirklichen, bedarf es eines Anschlagmittels, welches den der landwirtschaftlichen Zug- und Antriebsmaschine zugewandten Anschlusskopf des Oberlenkers umgreift und somit gemeinsam mit dem Oberlenker in der Oberlenkaufnahmetasche der landwirtschaftlichen Zug- und Antriebsmaschine arretiert werden kann. Die dabei vorgesehene relative Verschwenkbarkeit des Anschlagmittels gegenüber dem der landwirtschaftlichen Zug- und Antriebsmaschine zugewandten Anschlusskopf des Oberlenkers bietet den Vorteil, dass auch während der Aushubbewegung des Hubwerkes durch Veränderungen der Winkel zwischen dem Oberlenker und den Arretierungsketten keine Biegkräfte in den Oberlenker eingebracht werden.

Eine einfache Ausführungsform geht davon aus, dass das Anschlagmittel aus zwei Winkellaschen gebildet ist, welche über eine Verbindungslasche miteinander verbunden sind. So entsteht auf einfache Art und Weise eine vierkantförmige Aussparung, in der dann der der landwirtschaftlichen Zug- und Antriebsmaschine zugewandte Anschlusskopf des Oberlenkers aufgenommen werden kann, bevor beide dann mit einem Bolzen in der Oberlenkeraufnahmetasche arretiert werden können. Die erfindungsgemäße Anlenkung eines Oberlenkers an eine landwirtschaftliche Zug- und Antriebsmaschine kann damit für alle möglichen Fabrikate Anwendung finden, da für die Einbaubreite eine standardisierte Größe vorgesehen ist.

Für ein besonders gutes Handling kann es sich als sinnvoll erweisen, wenn das Anschlagmittel und der der landwirtschaftlichen Zug- und Antriebsmaschine zugewandte Anschlusskopf des Oberlenkers eine vormontierbare Einheit bilden. Dies ist beispielsweise dadurch zu erreichen, dass beide Teile im Bereich der Anschlussbohrung durch eine Buchse miteinander verbunden sind.

Die Erfindung soll nun anhand eines Ausführungsbeispiels näher erläutert werden:
In der Zeichnung zeigt
   - **Fig.1**:: eine teilweise abgebrochen dargestellte Seitenansicht auf ein erfindungsgemäßes Hubwerk einer landwirtschaftlichen Zug- und Antriebsmaschine mit einem vorgebauten Arbeitsgerät;
   - **Fig.2:**: eine Seitenansicht des Oberlenkers nach Fig. 1;
   - **Fig.3:**: eine Draufsicht des Oberlenkers nach Fig. 1;

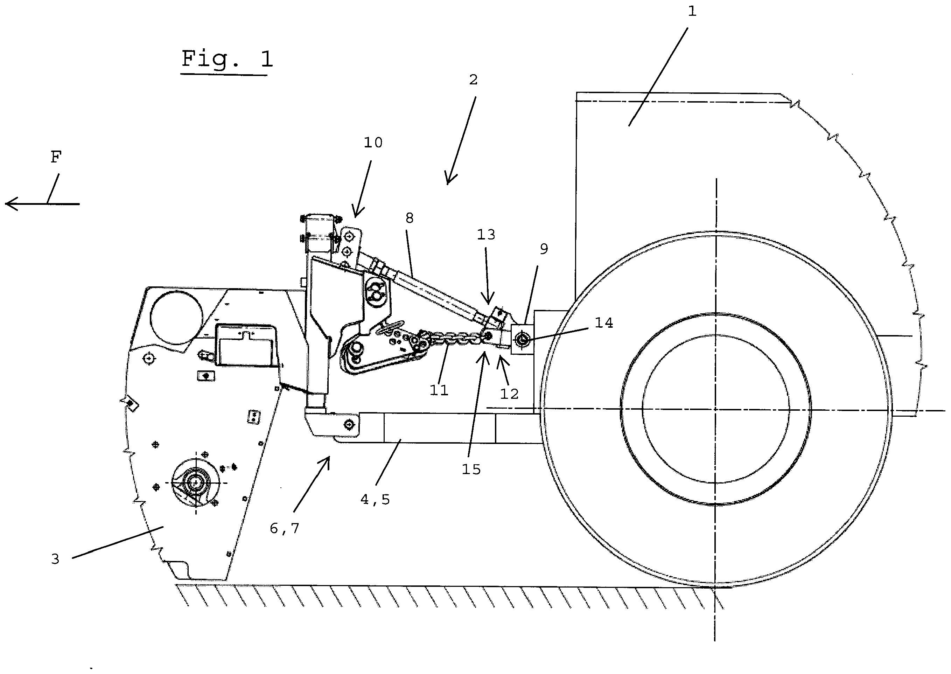

Das Ausführungsbeispiel nach Fig. 1 zeigt eine landwirtschaftliche Zug- und Antriebsmaschine 1 mit einem erfindungsgemäßen Hubwerk 2 zum Anbringen eines Arbeitsgerätes 3 im Frontanbau. Als Arbeitsgerät ist hier vorzugsweise auf ein Frontmähwerk abgestellt, wobei eine Nutzung der erfinderischen Merkmale grundsätzlich bei allen denkbaren Arbeitsgeräten vorgesehen sein kann, die im Frontanbau an eine landwirtschaftliche Zug- und Antriebsmaschine ankoppelbar sind.

Wie weiterhin aus der Fig. 1 hervorgeht, umfasst das Hubwerk 2 zwei Unterlenker 4,5, die sich von zwei gestellfesten Anlenkstellen der landwirtschaftlichen Zug- und Antriebsmaschine 1 zu Unterlenkeraufnahmestellen 6,7 des Arbeitsgerätes 3 hin erstrecken. Ebenfalls zum Hubwerk 2 gehört ein Oberlenker 8, der einenends in einer Oberlenkeraufnahmetasche 9 der landwirtschaftlichen Zug- und Antriebsmaschine angelenkt ist und anderenends an einer Oberlenkeraufnahmestelle 10 des Arbeitsgerätes 3 angeschlossen ist. Nicht dargestellte hydraulische Antriebsmittel der landwirtschaftlichen Zug- und Antriebsmaschine 1 sorgen dafür, dass das Arbeitsgerät 3 aus der in Fig.1 dargestellten Arbeits- und Betriebsstellung, in der das beispielsweise als Frontmähwerk ausgebildete Arbeitsgerät 3 in Fahrt- und Arbeitsrichtung F gleitend über den Erdboden geführt wird, in eine ausgehobene Transportstellung überführt werden kann. Hinsichtlich der Gestaltung des Oberlenkers 8 sei noch darauf verwiesen, dass dieser sowohl als mechanisch in seiner Länge verstellbarer Oberlenker als auch als hydraulisch längenverstellbarer Oberlenker ausgeführt sein kann. Ferner ist es selbstverständlich, dass die Anschlusselemente des Oberlenkers 8 am Arbeitsgerät 3 und an der landwirtschaftlichen Zug- und Antriebsmaschine 1 so gestaltet sein können wie es Fig. 1 bis 3 wiedergibt oder aber als handelübliche Kugelgelenke ausgebildet sein können.

In dem in Fig.1 dargestellten Ausführungsbeispiel sind dem Hubwerk 2 Arretierungsketten 11 zugeordnet, welche beispielsweise zur Festlegung der Arbeitshöhe dienen können. Die Anlenkung dieser Arretierungsketten erfolgt erfindungsgemäß über ein Anschlagmittel 12, welches dem der landwirtschaftlichen Zug- und Antriebsmaschine 1 zugewandten Anschlusskopf 13 des Oberlenkers 8 derartig zugeordnet ist, dass der Anschlusskopf 13 des Oberlenkers 8 mit dem diesen umgreifenden Anschlagmittel 12 über einen Bolzen 14 in der Oberlenkeraufnahmetasche 9 der landwirtschaftlichen Zug- und Antriebsmaschine 1 schwenkbeweglich angelenkt ist. Das Anschlagmittel 12 bildet also beidseitig von dem Oberlenker 8 Anschlussstellen 15 für die Arretierungsketten 11. Bei einem weiteren Ausführungsbeispiel können anstelle der Arretierungsketten 11 auch mechanische oder hydraulische Entlastungselemente eingesetzt werden, um die Auflagekraft des Frontmähwerks auf dem Erdboden regulieren zu können.

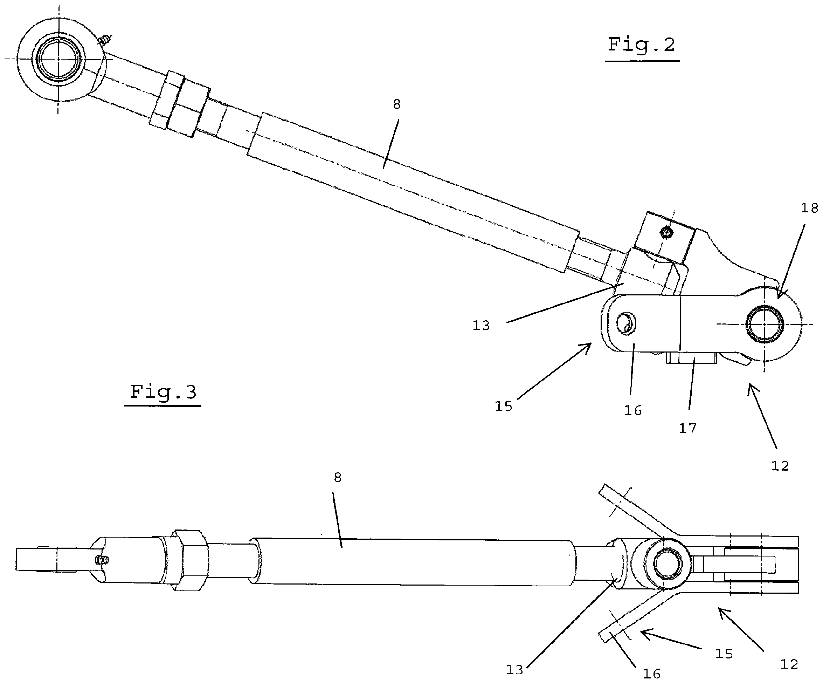

In Fig. 2 und 3 ist der Oberlenker 8 in einer vergrößerten Darstellung näher veranschaulicht, wobei der Anschlusskopf 13 des Oberlenkers 8 von dem Anschlagmittel 12 umgriffen ist. Wie diesen Figuren deutlich entnehmbar ist, besteht das Anschlagmittel 12 aus zwei seitlichen Winkellaschen 16, die über eine Verbindungslasche 17 miteinander verbunden sind. Fig. 3 zeigt hier besonders deutlich die etwa vierkantförmige Aussparung, in der dann beim Zusammenfügen der Anschlusskopf 13 des Oberlenkers 8 aufgenommen werden kann. Diese Darstellung zeigt ebenfalls, dass es auch vorteilhaft sein kann, den Anschlusskopf 13 des Oberlenkers 8 und das Anschlagmittel 12 als eine vormontierbare Einheit auszubilden. Hierzu könnte eine Buchse dienen, die im Bereich der Anschlussbohrung 18 beide Teile miteinander verbindet.

## Patentansprüche

1. Hubwerk für ein im Frontanbau an eine landwirtschaftliche Zug- und Antriebsmaschine (1) anbringbares Arbeitsgerät (3), insbesondere für ein Frontmähwerk, mit zwei an gestellfesten Anlenkstellen der landwirtschaftlichen Zug- und Antriebsmaschine (1) schwenkbar angebrachten Unterlenkern (4,5) zur Aufnahme der Unterlenkeraufnahmestellen (6,7) des Arbeitsgerätes (3) und einem Oberlenker (8), der sich zwischen einer Oberlenkeraufnahmetasche (9) der landwirtschaftlichen Zug- und Antriebsmaschine (1) und einer Oberlenkeraufnahmestelle (10) am Arbeitsgerät (3) erstreckt, **dadurch gekennzeichnet, dass** dem Oberlenker (8) an seinem der landwirtschaftlichen Zug- und Antriebsmaschine (1) zugewandten Anschlusskopf (13) ein Anschlagmittel (12) zugeordnet ist, welches gleichzeitig mit dem der landwirtschaftlichen Zug- und Antriebsmaschine (1) zugewandten Anschlusskopf (13) des Oberlenkers (8) in der Oberlenkeraufnahmetasche (9) der landwirtschaftlichen Zug- und Antriebsmaschine (1) arretierbar ist, wobei das Anschlagmittel (12) gegenüber dem der landwirtschaftlichen Zug- und Antriebsmaschine (1) zugewandten Anschlusskopf (13) relativ beweglich ist.

2. Hubwerk nach Anspruch 1, **dadurch gekennzeichnet, dass** das Anschlagmittel (12) dazu einrichtet ist, in Bezug zur Fahrt- und Arbeitsrichtung (F) beidseitig von dem Oberlenker (8) Anschlussstellen (15) zur Aufnahme von Arretierungsketten (11) zur Vorgabe der Arbeitshöhe des Arbeitsgerätes (3) bereitzustellen.

3. Hubwerk nach Anspruch 1, **dadurch gekennzeichnet, dass** das Anschlagmittel (12) dazu einrichtet ist, in Bezug zur Fahrt- und Arbeitsrichtung (F) beidseitig von dem Oberlenker (8) Anschlussstellen (15) zur Aufnahme von mechanischen oder hydraulischen Entlastungselementen zur Vorgabe der Auflagekraft des Arbeitsgerätes auf dem Boden bereitzustellen.

4. Hubwerk nach zumindest einem der Ansprüche 1 bis 3, **dadurch gekennzeichnet, dass** das Anschlagmittel (12) im eingebauten Zustand den der landwirtschaftlichen Zug- und Antriebsmaschine (1) zugewandten Anschlusskopf (13) des Oberlenkers (8) umgreift.

5. Hubwerk nach Anspruch 4, **dadurch gekennzeichnet, dass** das Anschlagmittel (12) aus zwei seitlichen Winkellaschen (16) und einer Verbindungslasche (17) besteht, zwischen denen im eingebauten Zustand der der landwirtschaftlichen Zug- und Antriebsmaschine (1) zugewandte Anschlusskopf (13) des Oberlenkers (8) aufgenommen ist.

6. Hubwerk nach zumindest einem der Ansprüche 4 oder 5, **dadurch gekennzeichnet, dass** die seitlichen Winkellaschen (16) des Anschlagmittels (12) und der der landwirtschaftlichen Zug- und Antriebsmaschine (1) zugewandte Anschlusskopf (13) des Oberlenkers (8) im eingebauten Zustand von einem Bolzen (14) der Oberlenkeraufnahmetasche (9) durchsetzt sind.

7. Hubwerk nach zumindest einem der Ansprüche 4 bis 6, **dadurch gekennzeichnet, dass** die seitlichen Winkellaschen (16) des Anschlagmittels (12) relativ zu dem der landwirtschaftlichen Zug- und Antriebsmaschine (1) zugewandten Anschlusskopf (13) des Oberlenkers (8) im eingebauten Zustand um den Bolzen (14) der Oberlenkeraufnahmetasche (9) schwenkbar sind.

8. Hubwerk nach zumindest einem der Ansprüche 4 bis 7, **dadurch gekennzeichnet, dass** die seitlichen Winkellaschen (16) des Anschlagmittels (12) und der der landwirtschaftlichen Zug- und Antriebsmaschine (1) zugewandte Anschlusskopf (13) des Oberlenkers (8) im zusammengefügten Zustand eine standardisierte Einbaubreite aufweisen.

9. Hubwerk nach zumindest einem der Ansprüche 1 bis 8, **dadurch gekennzeichnet, dass** das Anschlagmittel (12) und der der landwirtschaftlichen Zug- und Antriebsmaschine (1) zugewandte Anschlusskopf (13) des Oberlenkers (8) eine vormontierbare Einheit bilden.

## Claims

1. Hoisting gear for a tool (3) that is attachable to the front of an agricultural tractor and driving machine (1), in particular for a front mower, comprising two lower links (4,5) that are pivotally attached to articulation points of the agricultural tractor and driving machine (1) that are fixed to the chassis, which lower links are intended for receiving the lower link receiving points (6, 7) of the tool (3), and an upper link (8) which extends between an upper link receiving pocket (9) of the agricultural tractor and driving machine.(1) and an upper link receiving point (10) on the tool (3), **characterised in that** the upper link (8) is associated, at its connector head (13) facing the agricultural tractor and driving machine (1), with a stop means (12), which can be locked in the upper link receiving pocket (9) of the agricultural tractor and driving machine (1) simultaneously with the connector head (13) of the upper link (8) facing the agricultural tractor and driving machine (1), the stop means (12) being relatively movable with respect to the connector head (13) facing the agricultural tractor and driving machine (1).

2. Hoisting gear according to claim 1, **characterised in that** the stop means (12) is designed to provide connecting points (15) on either side of the upper link (8) in relation to the travel and operating direction (F) for receiving locking chains (11) for setting the working height of the tool (3).

3. Hoisting gear according to claim 1, **characterised in that** the stop means (12) is designed to provide connecting points (15) on either side of the upper link (8) in relation to the travel and operating direction (F) for receiving mechanical or hydraulic load-relief elements for setting the bearing force of the tool on the ground.

4. Hoisting gear according to any of claims 1 to 3, **characterised in that**, in the installed state, the stop means (12) surrounds the connector head (13) of the upper link (8) facing the agricultural tractor and driving machine (1).

5. Hoisting gear according to claim 4, **characterised in that** the stop means (12) consists of two lateral angular tabs (16) and a connecting tab (17), between which the connector head (13) of the upper link (8) facing the agricultural tractor and driving machine (1) is housed in the installed state.

6. Hoisting gear according to at least one of claims 4 or 5, **characterised in that**, in the installed state, the lateral angular tabs (16) of the stop means (12) and the connector head (13) of the upper link (8) facing the agricultural tractor and driving machine (1) are penetrated by a bolt (14) of the upper link receiving pocket (9).

7. Hoisting gear according to at least one of claims 4 to 6, **characterised in that**, in the installed state, the lateral angular tabs (16) of the stop means (12) are pivotable about the bolt (14) of the upper link receiving pocket (9) relative to the connector head (13) of the upper link (8) facing the agricultural tractor and driving machine (1).

8. Hoisting gear according to at least one of claims 4 to 7, **characterised in that**, in the assembled state, the lateral angular tabs (16) of the stop means (12) and the connector head (13) of the upper link (8) facing the agricultural tractor and driving machine (1) have a standardised installation width.

9. Hoisting gear according to at least one of claims 1 to 8, **characterised in that**, in the installed state, the stop means (12) and the connector head (13) of the upper link (8) facing the agricultural tractor and driving machine (1) form a pre-assembled unit.

## Revendications

1. Mécanisme de levage d'un appareil de travail (3) destiné à un montage frontal sur un engin de traction et d'entraînement agricole (1), en particulier d'une tondeuse frontale comprenant deux bras oscillants inférieurs (4, 5) montés pivotant en deux points d'articulation solidaires du châssis de l'engin de traction et d'entraînement agricole (1) pour recevoir les points de réception (6, 7) de ces bras inférieurs (4, 5) de l'appareil de travail (3), et un bras oscillant supérieur (8) qui s'étend entre une poche de réception (9) de ce bras supérieur de l'engin de traction et d'entraînement agricole (1) et un point de réception (10) du bras supérieur sur l'appareil de travail (3),
**caractérisé en ce qu'**
au bras supérieur (8) est associé, sur sa tête de connexion (13) tournée vers l'engin de traction et d'entraînement agricole (1) un moyen d'arrêt (12) qui peut être simultanément bloqué avec la tête de connexion (13) du bras supérieur (8) tournée vers l'engin de traction et d'entraînement agricole (1) dans la poche de réception (9) du bras supérieur de l'engin de traction et d'entraînement agricole (1), le moyen d'arrêt (12) étant mobile par rapport à la tête de connexion (13) tournée vers l'engin de traction et d'entraînement agricole (1).

2. Mécanisme de levage (1),
**caractérisé en ce que**
le moyen d'arrêt (12) est réalisé pour permettre d'obtenir, de part et d'autre du bras supérieur (8) par rapport à la direction de déplacement et de travail (F), des points de connexion (15) de chaînes de blocage (11) permettant de définir la hauteur de travail de l'appareil de travail (3).

3. Mécanisme de levage conforme à la revendication 1,
**caractérisé en ce que**
le moyen d'arrêt (12) est réalisé pour permettre d'obtenir, de part et d'autre du bras supérieur (8) par rapport à la direction de déplacement et de travail (F) des points de connexion (15) d'éléments d'équilibrage mécaniques ou hydrauliques permettant de définir la force d'appui de l'appareil de travail sur le sol.

4. Mécanisme de levage conforme à au moins l'une des revendications 1 à 3,
**caractérisé en ce qu'**
à l'état monté, le moyen d'arrêt (12) entoure la tête de connexion (13) du bras supérieur (8) tournée vers l'engin de traction et d'entraînement agricole (1).

5. Mécanisme de levage conforme à au moins la revendication 4, **caractérisé en ce que**
le moyen d'arrêt (12) est constitué de deux pattes angulaires latérales (16) et d'une patte de liaison (17) entre lesquelles, est logée à l'état monté, la tête de connexion (13) du bras supérieur (8) tournée vers l'engin de traction et d'entraînement (1).

6. Mécanisme de levage conforme à au moins l'une des revendications 4 et 5,
**caractérisé en ce que**
les pattes angulaires latérales (16) du moyen d'arrêt (12) et la tête de connexion (13) du bras supérieur (8) tournée vers l'engin de traction et d'entraînement agricole (1) sont traversées à l'état monté par un goujon (14) de la poche de réception (9) du bras supérieur.

7. Mécanisme de levage conforme à au moins l'une des revendications 4 à 6,
**caractérisé en ce que**
les pattes angulaires latérales (16) du moyen d'arrêt (12) sont susceptibles à l'état monté de pivoter autour du goujon (14) de la poche de réception du bras supérieur (9) par rapport à la tête de connexion (13) du bras supérieur (8) tournée vers l'engin de traction et d'entraînement agricole (1).

8. Mécanisme de levage conforme à au moins l'une des revendications 4 à 7,
**caractérisé en ce que**
les pattes angulaires latérales (16) du moyen d'arrêt (12) et la tête de connexion (13) du bras supérieur (8) tournée vers l'engin de traction et d'entraînement agricole (1) ont, à l'état assemblé, une largeur standard.

9. Mécanisme de levage conforme à au moins l'une des revendications 1 à 8,
**caractérisé en ce que**
le moyen d'arrêt (12) et la tête de connexion (13) du bras supérieur (8) tournée vers l'engin de traction et d'entraînement agricole (1) forment une unité pouvant être préalablement montée.
